Europäisches Patentamt

European Patent Office

Office européen des brevets

(19)

(11) Veröffentlichungsnummer: **0 131 848**
**B1**

(12) EUROPÄISCHE PATENTSCHRIFT

(45) Veröffentlichungstag der Patentschrift: 02.05.90

(51) Int. Cl.⁵: **C 01 B 25/047, C 01 B 25/027**

(21) Anmeldenummer: **84107760.5**

(22) Anmeldetag: **04.07.84**

(54) Verfahren zum Ausschleusen von Fremdstoffen aus dem Materialkreislauf bei der elektrothermischen Herstellung von gelbem Phosphor.

(30) Priorität: 18.07.83 DE 3325813
11.02.84 DE 3404952

(43) Veröffentlichungstag der Anmeldung:
23.01.85 Patentblatt 85/04

(45) Bekanntmachung des Hinweises auf die
Patenterteilung:
02.05.90 Patentblatt 90/18

(84) Benannte Vertragsstaaten:
DE FR GB NL

(56) Entgegenhaltungen:
US-A-2 267 077
US-A-3 734 717
US-A-3 743 700

(73) Patentinhaber: HOECHST
AKTIENGESELLSCHAFT
Postfach 80 03 20
D-6230 Frankfurt am Main 80 (DE)

(72) Erfinder: Röttgen, Karl
Ritter-Arnold-Strasse 9
D-5042 Erftstadt (DE)
Erfinder: Stendel, Joachim, Dr.
Schlaunstrasse 8
D-5040 Brühl (DE)
Erfinder: Diskowski, Herbert, Dr.
Fasanenaue 6
D-5042 Erftstadt (DE)
Erfinder: Tiedemann, Jens, Dr.
Stauffenbergstrasse 4
D-5042 Erftstadt (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 131 848 B1

## Beschreibung

Die vorliegende Erfindung betrifft ein Verfahren zum Ausschleusen von Fremdstoffen, insbesondere Zink, aus dem Materialkreislauf bei der Herstellung von gelbem Phosphor im elektrothermischen Ofen, wobei aus dem mit Phosphatpellets, Koks und Kies beschickten Ofen Ferrophosphor und eine im wesentlichen aus Calciummetasilikat bestehende Schlacke in schmelzflüssiger Form sowie Staub enthaltendes, im wesentlichen aus Kohlenmonoxid und Phosphordampf bestehendes Gasgemisch abgezogen wird, und wobei der Staub nach elektrostatischer Abtrennung vom Gasgemisch mit Wasser zu einer Staubmaische angerührt wird, und wobei Rohphosphat mit einer Mischung aus Staubmaische under einer Tonmaische mit Hilfe einer Granuliereinrichtung zu Formlingen verarbeitet wird, welche auf einer Sintereinrichtung zu Phosphatpellets geglüht werden.

Es ist bekannt, in einem elektrothermischen Ofen aus einer aus Phosphatpellets, Koks und Kies bestehenden Möllermischung gelben Phosphor herzustellen. Dabei wird aus dem Ofen ein staubhaltiges, im wesentlichen Phosphordampf und Kohlenmonoxid enthaltendes Gasgemisch sowie in schmelzflüssiger Form Ferrophosphor und eine im wesentlichen aus Calciummetasilikat bestehende Schlacke abgezogen. Das staubhaltige Gasgemisch wird in einem Elektroabscheider entstaubt, wobei der am Boden des Elektroabscheiders ausgetragene Staub in einem nachgeschalteten Behälter mit Wasser zu einer Staubmaische angerührt wird. Die Staubmaische dient zusammen mit einer Tonmaische als Bindemittel für die Agglomerierung von Rohphosphat auf Drehtellern mit anschließender Calcinierung zu Phosphatpellets. Während Ferrophosphor gegebenenfalls zur Gewinnung des in ihm enthaltenen Vanadiums aufgearbeitet oder bei der Herstellung von phosphorreichen Legierungen benutzt werden kann, stellt die Schlacke ein relativ wertloses Material dar, welches Deponien zugeführt wird (vergleiche "Ullmanns Encyklopädie der technischen Chemie", 4. Auflage, 1979, Seiten 288 bis 295).

Bei der Rückführung des elektrostatisch aus dem Gasgemisch abgetrennten Stabues in den Materialkreislauf des elektrothermischen Phosphorofens erfolgt eine Anreicherung verschiedener Fremdstoffe wie Zink, Cadmium und anderer Schwermetalle, aber auch wirtschaftlich interessanter Metalle wie Gallium und Germanium. Dabei liegen die Fremdstoffe teilweise als Phosphide vor, beispielsweise Zink als $ZnP_2$ oder $Zn_3P_2$.

Die Auswirkung eines hohen Fremdstoffgehaltes im Materialkreislauf des elektrothermischen Phosphorofens sei anhand des Zinkumlaufes erläutert. Dabei ist zu berücksichtigen, daß die Zink-Konzentration im Materialkreislauf des Phosphorofens in erster Linie vom Zink-Gehalt der Rohstoffe, insbesondere des Rohphosphates abhängt, wobei etwa 4% des den Phosphorofen durchlaufenden Zinks mit der Schlacke und dem Ferrophosphor ausgeschleust wird. Die Phosphide des Zinks, welche sich aus dem reduzierten Zink in der phosphordampfgesättigten Ofenatmosphäre bilden, sind sublimierbar und kondensieren bei Temperaturen von weniger als 1000°C in den kälteren Bereichen im Ofen, beispielsweise unter Bildung von Verkrustungen auf der Möllermischung. Durch die Verkrustungen wird die Rieselfähigkeit der Möllermischung herabgesetzt. Von der Rieselfähigkeit der Möllermischung und ihrer Gasdurchlässigkeit aber hängt es ab, ob ein guter Wärmeaustausch zwischen den aufwärts strömenden Gasgemisch aus Phosphordampf und Kohlenmonoxid und der von oben nachrutschenden relativ kalten Möllermischung erfolgt. Strömt das Gasgemisch zu heiß aus dem Phosphorofen ab, so werden einerseits die Ofendecke und darin angeordnete Einrichtungen gefährdet und andererseits läßt die Wirksamkeit des Elektroabscheiders nach. Schließlich tritt beim Eintrag des mit 400 bis 600°C aus dem Elektroabscheider ausgetragenen Staubes in Wasser und bei der Gewinnung der Staubmaische Hydrolyse eines Teiles der Zinkphosphide ein. Dadurch wird die Staubmaische hochviskos und ist schlect weiterzuverarbeiten. Bei Eintrag von Ton in eine solche Staubmaische erfolgt eine weitere Verdickung, so daß sich der Zusatz von Ton zu einer Hydrolyseprodukte der Zinkphosphide enthaltenen Staubmaische verbietet. Bei der Verwendung einer Staubmaische ohne Tonzusatz als Granuliermaische für Rohrphosphat ist aber nicht sichergestellt, daß einerseits die Bindefähigkeit bei der Granulation des Rohphosphates zu Formlingen und andererseits die Abriebfestigkeit der aus den Formlingen durch Glühen hergestellten Phosphatpellets ausreichend ist. Abriebfreudige Phosphatpellets führen aber im Phosphorofen zu Staubwächten, durch welche die Gasdurchlässigkeit der Möllermischung und der Wärmeaustausch zwischen dem im Phosphorofen gebildetem Gasgemisch under der Möllermischung herabgesetzt wird. Gegenüber dem normalen Gang des Phosphorfens tritt dadurch eine Erhöhung der Temperatur des den Phosphorofen verlassenden Gasgemisches ein, wodurch die Funktionsfähigkeit des Elektroabscheiders beeinträchtigt und letztlich die elektrische Leistungsaufnahme des Phosphorofens begrenzt wird.

Es ist daher Aufgabe der vorliegenden Erfindung, ein Verfahren zum Ausschleusen von Fremdstoffen, insbesondere Zink, aus dem Materialkreislauf bei der Herstellung von gelbem Phosphor im elektrothermischen Ofen anzugeben, bei welchem ein die Fremdstoffe in unlöslicher Form enthaltendes, deponierfähiges Produkt anfällt. Das wird erfindungsgemäß dadurch erreicht, daß man einen Teil der Schlacke mahlt; daß man die gemahlene Schlacke mit mindestens einem Teil der Staubmaische mit Hilfe einer Granuliereinrichtung zu einem Granulat verarbeitet; und daß man das Granulat trocknet.

Das Verfahren gemäß der Erfindung kann weiterhin wahlweise auch noch dadurch ausgestaltet sein, daß

a) man das getrocknete Granulat erneut mahlt und das Mahlgut mit weitere Staubmaische granuliert und trocknet;

2

b) man dem Mahlgut kalziumoxidhaltige Verbindungen, vorzugsweise Kalksteinmehl und/oder Hydratkalk, zusetzt;

c) man das getrocknete und gemahlene Granulat und Staubmaische im Gewichtsverhältnis von 6:1 bis 7:1 granuliert;

d) man dem zum Mahlen vorgesehenen Teil der Schlacke durch Filtrieren von Staubmaische erhaltenen Filterkuchen zusetzt;

e) das Gewichtsverhältnis von Schlacke zu Filterkuchen von 0,5:1 bis 10:1 beträgt;

f) man dem Gemisch aus Schlacke und Filterkuchen kalziumoxidhaltige Verbindungen, vorzugsweise Kalksteinsplit, zusetzt;

g) man die Schlacke bzw. das Gemisch aus Schlacke und Filterkuchen bzw. das Gemisch aus Schlacke, Filterkuchen und kalziumoxidhaltigen Verbindungen auf Korngrößen von 80% <100 µm mahlt;

h) man das Granulat bei Temperaturen von 80 bis 150°C trocknet;

i) man die gemahlene Schlacke bzw. das gemahlene Gemisch aus Schlacke und Filterkuchen bzw. das gemahlene Gemisch aus Schlacke, Filterkuchen und kalziumoxidhaltigen Verbindungen mit Staubmaische im Gewichtsverhältnis von 5:1 bis 7:1 zum Granulat verarbeitet;

j) man das getrocknete Granulat unter Bildung von Pellets glüht; und daß man die Pellets gemeinsam mit der übrigen, nicht behandelten Schlacke einer Deponie zuführt;

k) man das getrocknete Granulat bei Temperaturen von 500 bis 800°C glüht.

Mit dem Verfahren gemäß der Erfindung ist es möglich, durch Ausschleusen eines geeigneten Anteils des elektrostatisch abgeschiedenen Staubes die Fremdstoffkonzentration im Materialkreislauf des Phosphorofens von der mit den Rohstoffen, insbesondere mit dem Rohphosphat, eingebrachten Fremdstoffmenge gezielt abzusenken. Daher ist es bei Anwendung des Verfahrens gemäß der Erfindung beispielsweise auch möglich, zinkreiche Rohphosphate im elektrothermischen Phosphorofen ohne Störungen im Betrieb des Ofens einzusetzen.

Durch das erfindungsgemäße Verfahren wird die Wirtschaftlichkeit der Herstellung von gelbem Phosphor im elektrothermischen Ofen verbessert, indem einerseits der für die Reduktion der ausgeschleusten Fremdstoffe erforderliche Mehrverbrauch an elektrischem Strom und Koks eingespart und andererseits die Ausbeute an gelbem Phosphor erhöht wird, da das Zink Phosphor als Phosphide bindet, wobei der Phosphor bei der Hydrolyse außerhalb des elektrothermischen Ofens oder bei der Oxidation während der Sinterung in elementarer Form verlorengeht.

Das Verfahren gemäß der Erfindung kann mit Hilfe einer aus Mühle, Granuliereinrichtung und Sintereinrichtung bestehenden Anordnung durchgeführt werden, wie sie auch für die Herstellung von Phosphatpellets gebräuchlich ist.

Beim erfindungsgemäßen Verfahren ist es zweckmäßig, das getrocknete Granulat nicht sofort zu glühen und auf die Deponie zu geben, sondern erneut zu mahlen und mit weiterer Staubmaische auf dem Drehteller zu Granulat zu verarbeiten und zu trocknen. Dabei kann dieser Vorgang gegebenenfalls so oft wiederholt werden, bis eine gewünschte Menge Feststoff aus der Staubmaische an Schlacke gebunden ist. Dadurch erhält man ein mit Verunreinigungen hoch angereichertes Granulat, wobei im Laufe der Anreicherung auch noch Kalksteinmehl oder Hydratkalk zugesetzt werden kann, um das bei der Bildung unlöslicher Phosphate verbrauchte CaO zu ergänzen, so daß die Matrix ihren neutralen bis alkalischen Charakter behält. Ist das Granulat in erwünschter Weise angereichert, so wird es nach der letzten Trocknung geglüht.

Beim Verfahren gemäß der Erfindung kann eine erhebliche Menge Energie sowie Aufarbeitungszeit und Kapazität der Einrichtung eingespart werden, wenn man den größten Teil der aus dem Phosphor-Produktionsprozeß abgezweigten Staubmaische zunächst durch Filtrieren in einem Filterkuchen und ein Filtrat auftrennt. Während das Filtrat in den Phosphor-Produktionsprozeß zurückgeführt wird, wird der Filterkuchen gemeinsam mit der Schlacke vermahlen. Nach anschließender Granulierung des gemahlenen Filterkuchen - Schlacken - Gemisches mit Hilfe von Staubmaische sowie Trocknen und Glühen des Granulates erhält man in einem einzigen Schritt Pellets mit einem Staubmaische-Anteil von beispielsweise 40 Gewichts% und einem Zinkgehalt von mehr als 3 Gewichts%. Diese Pellets können unmittelbar gemeinsam mit unbehandelter Schlacke deponiert werden.

Beim erfindungsgemäßen Verfahren können dem Gemisch von Filterkuchen und Schlacke 10 bis 50 Gewichts% kalziumoxidhaltige Verbindungen, bezogen auf Filterkuchen, zugesetzt werden.

Das Verfahren gemäß der Erfindung sei anhand der beigefügten Zeichnung erläutert, in deren Blockschemata oberhalb der gestrichelten waagerechten Linie der Materialkreislauf bei der Herstellung von gelbem Phosphor im elektrothermischen Ofen nach dem Stand der Technik dargestellt ist, während unterhalb dieser Linie die erfindungsgemäße Ausschleusung von Fremdstoffen wiedergegeben ist. Dabei zeigen

Figur 1 die Granulierung von gemahlener Schlacke mit Staubmaische und

Figur 2 die Granulierung eines gemahlenen Gemisches von durch Filtration von Staubmaische erhaltenem Filterkuchen und Schlacke mit Staubmaische mit jeweils anschließendem Trocknen und Glühen unter Bildung von Pellets.

Eine abgewogene Menge 1 von Phosphatpellets 2, Koks 3 und Kies 4 wird in den elektrothermischen Reduktionsofen 5 eingebracht. Im unteren Bereich des Ofens 5 wird in schmelzflüssiger Form Schlacke 6 und Ferrophosphor 7 abgezogen, während vom Deckel des Ofens 5 eine Leitung 8 abgeht, über welche ein staubhaltiges, im wesentlichen aus Kohlenmonoxid und Phosphordampf bestehendes Gasgemisch einem Elektroabscheider 9 zugeführt wird. Den Elektroabscheider 9 verläßt das staubfreie Gasgemisch über eine zur Kondensation führende Leitung 10, während der Staub am Boden des Elektroabscheiders 9 austritt und über eine abgetauchte Leitung 11 in einen Waser enthaltenden Rührbehälter 12 eingetragen wird. Vom Boden des Rührbehälters 12 fließt die die Fremdstoffe enthaltende Staubmaische über eine Leitung 13 nach Vermischung mit Tonmaische aus der Leitung 14 dem Drehteller 15 zu. Rohphosphat wird über das Transportorgan 16 der Mühle 17 zugeführt. Das gemahlene Rohphosphat gelangt über ein Transportorgan 18 auf den Drehteller 15, auf welchem es mit der Mischung von Staubmaische und Tonmaische als Bindemittel in Formlinge überführt wird. Die Formlinge werden über das Transportorgan 19 der Sintereinrichtung 20 zugeführt und darin zunächst getrocknet und anschließend zu Rohphosphatpellets geglüht.

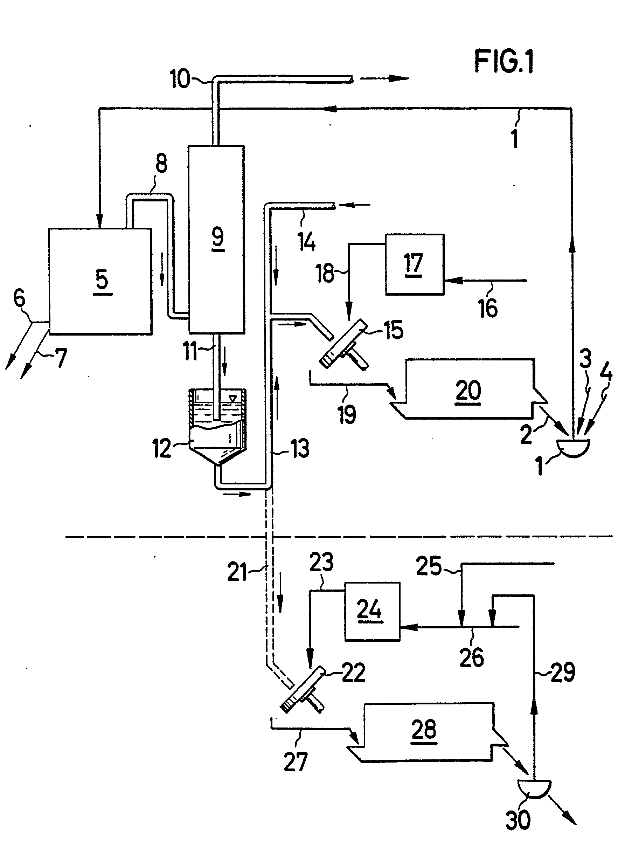

Nach Figur 1 wird ein Teil der die Fremdstoffe enthaltenden Staubmaische aus der Leitung 13 ausgeschleust und über eine Leitung 21 einem Drehteller 22 zugeführt. Auf den Drehteller 22 wird über ein Transportorgan 23 gemahlene Schlacke aufgegeben und mit Hilfe der Staubmaische aus der Leitung 21 zu einem Granulat verarbeitet. Die Schlacke ist vorher in einer Mühle 24 gemahlen worden, wobei die Mühle 24 über Transportorgane (25, 26) mit körniger Schlacke beaufschlagt wurde. Das Granulat wird über ein Transportorgan 27 einer Sintereinrichtung 28 zugeführt, in welcher es entweder nur getrocknet und über die Transportorgane (29, 26) erneut der Mühle 24 zugeführt wird oder es wird in der Sintereinrichtung 28 getrocknet und geglüht und über ein Transportorgan 30 auf die Deponie gegeben.

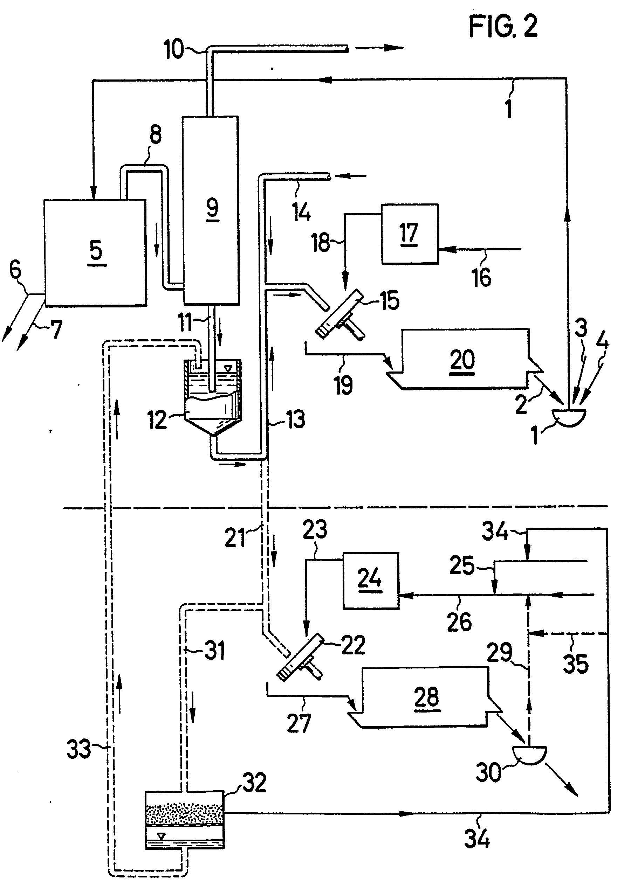

Nach Figur 2 wird ein Teil der die Fremdstoffe enthaltenden Staubmaische aus der Leitung 13 ausgeschleust und teilweise über eine Leitung 21 einem Drehteller 22 zugeführt. Von der Leitung 21 zweigt eine Leitung 31 ab, durch welche ein weiterer Teil der Staubmaische einem Filter 32 zugeführt wird. Während das Filtrat von dem Filter 32 durch eine Leitung 33 in den Rührbehälter 12 zurückgeführt wird, wird der Filterkuchen von Filter 32 durch ein Transportorgan 34 in ein Transportorgan 25 gefördert, durch welches körnige Schlacke herangeschafft wird. Die Mischung von Filterkuchen und körniger Schlacke fällt auf ein Transportorgan 26, welches mit einer Mühle 24 materialströmungsmäßig verbunden ist. Das die Mühle 24 verlassende gemahlene Gemisch von Filterkuchen und Schlacke wird über ein Transportorgan 23 dem Drehteller 22 zugeführt, auf welchem es mit Hilfe von aus der Leitung 21 austretender Staubmaische zu einem Granulat verarbeitet wird. Das Granulat wird über ein Transportorgan 27 einer Sintereinrichtung 28 zugeführt, in welcher es gegebenenfalls entweder nur getrocknet und über die Transportorgane (29, 26) nach Zumischung von weiterem Filterkuchen über die Transportorgane (34, 35) erneut der Mühle 24 zugeführt wird oder es wird in der Sintereinrichtung 28 getrocknet und zu Pellets geglüht, welche über ein Transportorgan 30 auf die Deponie gegeben werden.

Beispiel 1

Zwei elektrothermische Öfen zur Herstellung von gelbem Phosphor mit einer durchschnittlichen Gesamtleistung von 75 MW setzten pro Tag 1100 t Rohphosphat durch, welches als Fremdstoff u. a. $7,5 \cdot 10^{-3}\%$ Zink enthielt. Aus dem im wesentlichen aus Kohlenmonoxid und Phosphordampf bestehenden Gasgemisch wurde durch den Elektroabscheider soviel Staub abgeschieden, daß täglich Staubmaische mit einem Feststoffgehalt von etwa 25 t anfiel. Dabei wies die Staubmaische einen auf Feststoff bezogenen Zinkgehalt von 8,3% (entsprechend etwa 2 t Zink) auf.

Gemäß dem Blockschema nach Figur 1 wurde mit der Sinterstraße oberhalf der gestrichelten Linie (Mühle 17, Drehteller 15, Sintereinrichtung 20) Rohphosphat als Ofenrohstoff zu Phosphatpellets verarbeitet. Die Sinterstraße unterhalb der gestrichelten Linie (Mühle 24, Drehteller 22, Sintereinrichtung 28) diente zum erfindungsgemäßen Ausschleusen von Staubmaische in deponierbarer Form. Dabei wurde das mit etwa 440°C an der Sintereinrichtung 20 anfallende Kühlgas zur Trocknung des Granulates in der Sintereinrichtung 28 verwendet.

In der unteren Sinterstraße wurde in der Mühle 24 80 t entwässerte granulierte Phosphorofenschlacke auf eine Feinheit von 80% <100 μm gemahlen und mit Staubmaische auf dem Drehteller 22 granuliert. Nach dem Trocknen des Granulates auf der Sintereinrichtung 28 mit 440°C heißem Gas betrug seine Restfeuchte etwa 0,5%. Das getrocknete Granulat wurde 11 mal erneut gemahlen und mit weiterer Staubmaische granuliert und getrocknet, bis es einen Zinkgehalt von 3,6% aufwies. Danach durch das getrocknete Granulat unter Verwendung zusätzlicher Brenner auf der Sintereinrichtung 28 bei 800°C zu Pellets geglüht. Die Pellets waren frei von elementarem Phosphor und von Phosphiden.

Durch die mehrmalige Verwendung des getrockneten Granulates zur erfindungsgemäßen Umsetzung mit der Staubmaische reichten die 80 t Schlacke zur Verarbeitung von 140 m³ (entsprechend 175 t) Staubmaische aus.

Beispiel 2

In einer Granuliertrommel von 250 l Inhalt wurde eine gemahlene Mischung von 40 kg Phosphorofenschlacke und 10 kg Kalksteinmehl (Mahlfeinheit: 80% <0,1 mm) mit Staubmaische granuliert und bei 110°C getrocknet. Das Granulat wurde gemahlen und erneut mit weiterer Staubmaische granuliert und bei 110°C getrocknet. Dieser Zyklus wurde insgesamte 14 mal durchgeführt. Schließlich wurde das getrocknete Granulat bei 800°C unter Bildung von Pellets geglüht. Die Pellets wiesen einen Zinkgehalt von 5,8% auf. Die verwendete Staubmaische hatte eine Dichte von 1,2 kg/l, einen Feststoffgehalt von etwa 30% und einen auf den Feststoff bezogenen Zinkgehalt von 13%.

Beispiel 3

In die in Beispiel 2 verwendete Granuliertrommel wurden 40 kg gemahlene Phosphorofenschlacke und 29,6 kg Filterkuchen, welcher durch Filtration von Staubmaische erhalten worden war, eingefüllt und gemischt. Die Mischung wurde mit Hilfe von Staubmaische granuliert. Das Granulat wurde bei 110°C getrocknet und anschließend bei 800°C geglüht. Die resultierenden Pellets wiesen einen Zinkgehalt von 6,1% auf. Die verwendete Staubmaische hatte eine Dichte von 1,2 kg/l, einen Feststoffgehalt von etwa 30% und einen auf den Feststoff bezogenen Zinkgehalt von 13%.

Die nach den Beispielen 1 bis 3 erhaltenen Pellets wurden einem Eluationstest mit destilliertem Wasser unterworfen (vergl. DIN 38 414 (Entwurf) Teil 4, April 1983). Die Analyse der drei Eluate ist der Tabelle zu entnehmen.

TABELLE
Analyse der Eluate (mg/l)

|  | Beispiel 1 | Beispiel 2 | Beispiel 3 |
|---|---|---|---|
| As | 0,02 | <0,01 | 0,02 |
| F | 3 | <1 | 3 |
| Fe | 5 | <1 | 8 |
| Cr | 0,05 | <0,05 | 0,05 |
| Ni | <0,05 | <0,05 | <0,05 |
| Ti | 0,2 | <0,1 | 0,2 |
| V | <1 | <1 | ≤1 |
| U | 0,05 | <0,005 | 0,06 |
| Ba | <0,5 | <0,5 | <0,5 |
| Cd | <0,01 | <0,01 | <0,01 |
| Cu | 0,06 | <0,05 | 0,06 |
| Zn | 0,02 | <0,01 | 0,04 |
| Pb | <0,05 | <0,05 | <0,05 |
| Mn | 0,08 | <0,05 | 0,09 |

Daraus kann geschlossen werden, daß Pellets, welche unter Zusatz von Kalksteinmehl (vergleiche Beispiel 2) zur Phosphorofenschlacke erhalten wurden, eine verbesserte Deponierfähigkeit gegenüber Pellets ohne Kalksteinzusatz aufweisen (vergleiche die Beispiele 1 und 3).

**Patentansprüche**

1. Verfahren zum Ausschleusen von Fremdstoffen, insbesondere Zink, aus dem Materialkreislauf bei der Herstellung von gelbem Phosphor im elektrothermischen Ofen, wobei aus dem mit Phosphatpellets, Koks und Kies beschickten Ofen Ferrophosphor und eine im wesentlichen aus Calciummetasilikat bestehende Schlacke in schmelzflüssiger Form sowie ein Staub enthaltendes, im wesentlichen aus Kohlenmonoxid und Phosphordampf bestehendes Gasgemisch abgezogen wird, und wobei der Staub nach elektrostatischer Abtrennung vom Gasgemisch mit Wasser zu einer Staubmaische angerührt wird, und wobei Rohphosphat mit einer Mischung aus Staubmaische und einem Bindemittel, vorzugsweise Tonmaische, mit Hilfe einer Granuliereinrichtung zu Formlingen verarbeitet wird, welche auf einer Sintereinrichtung zu Phosphatpellets geglüht werden, dadurch gekennzeichnet, daß man einen Teil der Schlacke mahlt; daß man die gemahlene Schlacke mit mindestens einem Teil der Staubmaische mit Hilfe einer Granuliereinrichtung zu einem Granulat verarbeitet; und daß man das Granulat trocknet.

2. Verfahren nach Anspruch 1, dadurch gekennzeichnet, daß man das getrocknete Granulat erneut mahlt und das Mahlgut mit weiterer Staubmaische granuliert und trocknet.

3. Verfahren nach Anspruch 2, dadurch gekennzeichnet, daß man dem Mahlgut kalziumoxidhaltige Verbindungen, vorzugsweise Kalksteinmehl und/oder Hydratkalk, zusetzt.

4. Verfahren nach einem der Ansprüche 1 bis 3, dadurch gekennzeichnet, daß man das getrocknete und gemahlene Granulat und Staubmaische im Gewichtsverhältnis von 6:1 bis 7:1 granuliert.

5. Verfahren nach Anspruch 1, dadurch gekennzeichnet, daß man dem zum Mahlen vorgesehenen Teil der Schlacke durch Filtrieren von Staubmaische erhaltenen Filterkuchen zusetzt.

6. Verfahren nach Anspruch 5, dadurch gekennzeichnet, daß das Gewichtsverhältnis von Schlacke zu Filterkuchen von 0,5:1 bis 10:1 beträgt.

7. Verfahren nach Anspruch 5, dadurch gekennzeichnet, daß man dem Gemisch aus Schlacke und Filterkuchen kalziumoxidhaltige Verbindungen, vorzugsweise Kalksteinsplit, zusetzt.

8. Verfahren nach einem der Ansprüche 1 und 5 bis 7, dadurch gekennzeichnet, daß man die Schlacke bzw. das Gemische aus Schlacke und Filterkuchen bzw. das Gemisch aus Schlacke, Filterkuchen und kalziumoxidhaltigen Verbindungen auf Korngrößen von 80% <100 µm mahlt.

9. Verfahren nach einem der Ansprüche 1 bis 8, dadurch gekennzeichnet, daß man das Granulat bei Temperaturen von 80 bis 150°C trocknet.

10. Verfahren nach einem der Ansprüche 1 bis 9, dadurch gekennzeichnet, daß man die gemahlene Schlacke bzw. das gemahlene Gemisch aus Schlacke und Filterkuchen bzw. das gemahlene Gemisch aus Schlacke, Filterkuchen und Kalziumoxidhaltigen Verbindungen mit Staubmaische im Gewichtsverhältnis von 5:1 bis 7:1 zum Granulat verarbeitet.

11. Verfahren nach einem der Ansprüche 1 bis 10, dadurch gekennzeichnet, daß man das getrocknete Granulat unter Bildung von Pellets glüht; und daß man die Pellets gemeinsam mit der übrigen, nicht behandelten Schlacke einer Deponie zuführt.

12. Verfahren nach Anspruch 11, dadurch gekennzeichnet, daß man das getrocknete Granulat bei Temperaturen von 500 bis 800°C glüht.

**Revendications**

1. Procédé pour retirer les substances étrangères, en particulier le zinc, du circuit de matière dans la fabrication de phosphore blanc au four électrothermique, selon lequel on retire du four, chargé avec des pellets de phosphate, du coke et du gravier, du ferrophosphore et une scorie consistant essentiellement en métasilicate de calcium sous forme liquide ainsi qu'un mélange gazeux contenant de la poussière, consistant essentiellement en monoxyde de carbone et vapeur de phosphore, et selon lequel la poussière, après séparation électrostatique du mélange gazeux, est délayée par l'eau en une bouillie de poussière, et selon lequel le phosphate brut est transformé au moyen d'un appareil de granulation avec un mélange de bouillie de poussière et d'un liant, de préférence une bouillie d'argile, en agglomérés qui sont calcinés dans un appareil de frittage en pellets de phosphate, caractérisé en ce qu'on moud une partie de la scorie; en ce que l'on transforme la scorie moulue avec au moins une partie de la bouillie de poussière en un granulat au moyen d'un appareil de granulation; et en ce que l'on sèche le granulat.

2. Procédé selon la revendication 1, caractérisé en ce que l'on moud à nouveau le granulat séché et on granule le produit moulé avec de la bouillie de poussière supplémentaire et on sèche.

3. Procédé selon la revendication 2, caractérisé en ce que l'on ajoute au produit moulu des composés contenant de l'oxyde de calcium, de préférence de la farine de calcaire, de la chaux hydratée ou leur mélange.

4. Procédé selon l'une quelconque des revendications 1 à 3, caractérisé en ce que l'on granule le granulat séché et moulu et la bouillie de poussière dans un rapport pondéral de 6:1 à 7:1.

5. Procédé selon la revendication 1, caractérisé en ce que l'on ajoute à la partie de la scorie prévue pour la mouture le tourteau de filtration obtenu par filtration de la bouillie de poussière.

6. Procédé selon la revendication 5, caractérisé en ce que le rapport pondéral de la scorie au tourteau de filtration est de 0,5:1 à 10:1.

7. Procédé selon la revendication 5, caractérisé en ce que l'on ajoute au mélange de scorie et de tourteau de filtration des substances contenant de l'oxyde de calcium, de préférence des fragments de calcaire.

8. Procédé selon l'une quelconque des revendications 1 et 5 à 7, caractérisé en ce que l'on moud la scorie ou le mélange de scorie et de tourteau de filtration ou le mélange de scorie, de tourteau de filtration et de composés contenant de l'oxyde de calcium à 80% de particules de moins de 100 µm.

9. Procédé selon l'une quelconque des revendications 1 à 8, caractérisé en ce que l'on sèche le granulat à des températures de 80 à 150°C.

10. Procédé selon l'une quelconque des revendications 1 à 9, caractérisé en ce que l'on transforme en granulat la scorie moulue ou le mélange moulu de scorie et de tourteau de filtration ou le mélange moulu de scorie, de tourteau de filtration et de composés contenant de l'oxyde de calcium avec la bouillie de poussière dans un rapport pondéral de 5:1 à 7:1.

11. Procédé selon l'une quelconque des revendications 1 à 10, caractérisé en ce que l'on calcine le granulat séché avec formation de pellets; et en ce que l'on envoie sur une décharge les pellets avec la scorie restante, non broyée.

12. Procédé selon la revendication 11, caractérisé en ce que l'on calcine le granulat séché à des températures de 500 à 800°C.

**Claims**

1. A process for purging foreign substances, in particular zinc, from the material circulation in the production of yellow phosphorus in an electrothermal furnace, ferrophosphorus and a slag, composed essentially of calcium metasilicate, in the molten form as well as a dust-containing gas mixture composed essentially of carbon monoxide and phosphorus vapor being taken off from the furnace charged with phosphate pellets, coke and pebbles, and the dust, after electrostatic separation from the gas mixture, being stirred with water to give a dust paste, and crude phosphate being processed with a mixture of dust paste and a binder, preferably a clay paste, by means of a granulating device to give moldings which are calcined in a sintering device to give phosphate pellets, which comprises grinding a part of the slag, processing the ground slag with at least a part of the dust paste by means of a granulating device to give granules, and drying the granules.

2. The process as claimed in claim 1, wherein the dried granules are ground again and the ground material is granulated with further dust paste and dried.

3. The process as claimed in claim 2, wherein compounds containing calcium oxide, preferably ground limestone and/or hydrated lime, are added to the ground material.

4. The process as claimed in any of claims 1 to 3, wherein the dried and ground granules and dust paste are granulated in a weight ratio from 6:1 to 7:1.

5. The process as claimed in claim 1, wherein filter cake obtained by filtration of dust paste is added to the part of the slag intended for grinding.

6. The process as claimed in claim 5, wherein the slag/filter cake weight ratio is from 0.5:1 to 10:1.

7. The process as claimed in claim 5, wherein compounds containing calcium oxide, preferably limestone chippings, are added to the mixture of slag and filter cake.

8. The process as claimed in any of claims 1 and 5 to 7, wherein the slag or the mixture of slag and filter cake or the mixture of slag, filter cake and compounds containing calcium oxide is ground to grain sizes of 80% <100 µm.

9. The process as claimed in any of claims 1 to 8, wherein the granules are dried at temperatures from 80 to 150°C.

10. The process as claimed in any of claims 1 to 9, wherein the ground slag or the ground mixture of slag and filter cake or the ground mixture of slag, filter cake and compounds containing calcium oxide is processed with dust paste in a weight ratio from 5:1 to 7:1 to give granules.

11. The process as claimed in any of claims 1 to 10, wherein the dried granules are calcined to form pellets, and the pellets are taken to a waste dump together with the remaining, untreated slag.

12. The process as claimed in claim 11, wherein the dried granules are calcined at temperatures from 500 to 800°C.

FIG.1

FIG. 2